# EUROPEAN PATENT APPLICATION

(11) **EP 1 585 309 A1**
(43) Date of publication of application: **12.10.2005**
(21) Application number: 05102034.5
(22) Date of filing: 15.03.2005
(51) Int. Cl.: H04N 1/053

(54) **Apparatus and method for start of scan detection**

(30) Priority: 15.03.2004 US 800530
(71) Applicant: Hewlett-Packard Development Company, L.P., Texas 77070 (US)
(72) Inventor: Plotkin, Michael, 76101 Rehovot (IL); Livne, Haim, 76101 Rehovot (IL)
(74) Representative: Leadbetter, Benedict

(57) **Abstract**

A method of determining a start of scan time in a laser scanning system utilizing a scanning reflector, comprising:
directing a laser beam toward the scanning reflector so as to be reflected by the scanning reflector;
returning the laser beam reflected from the scanning reflector toward the scanning reflector for at least one additional reflection from the scanning reflector;
detecting the laser beam reflected at least twice from the scanning reflector; and
controlling the start of scan of the scanning system, responsive to the detection of the laser beam.

## Description

### FIELD OF THE INVENTION

The present invention relates generally to optical scanning systems.

### BACKGROUND OF THE INVENTION

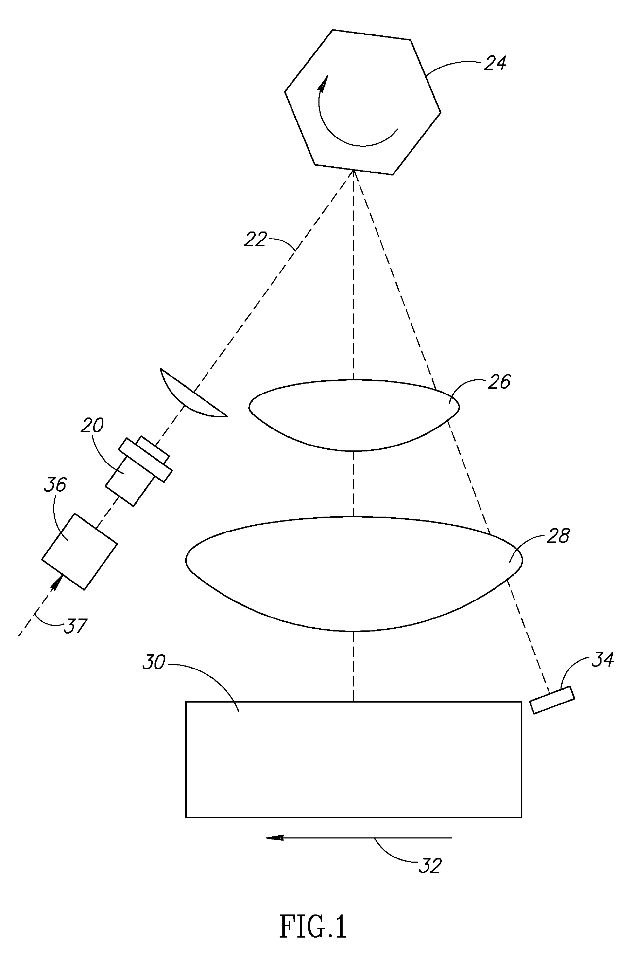

Fig. 1 shows a conventional scanning system which uses a laser beam deflected by a rotating polygon mirror. A laser source 20 directs a light beam 22 at a rotating polygon mirror 24. The laser light impinging on rotating mirror 24 is deflected through f-θ imaging lenses 26 and 28 at a cylindrical drum 30. As polygon mirror 24 rotates, the beam reaching drum 30 traverses in the direction of arrow 32 corresponding to the direction of scanning along a width of a page. A modulator 36 modulates the output of source 20, which is to be imprinted on drum 30 as an image, for printing therefrom, based on data received via line or bus 37. In order to synchronize the beginning of the modulation of data with the scanning of each line, a start-of-scan detector (SOSD) 34 is positioned adjacent drum 30. A controller times the operation of modulator 36, according to a light detection signal from detector 34. It should be understood that Fig. 1 is purely schematic and optical elements are not shown in detail. The other drawings in the application are also schematic. As known in the art, source 20 may produce a number of beams for simultaneous writing of multiple lines on drum 30.

Positioning detector 34 on the plane of drum 30 has various drawbacks which have brought forth various suggestions for other locations of detector 34.

U.S. patent 6,278,108 to Ori, the disclosure of which is incorporated herein by reference, describes an optical scanning apparatus in which the start of scan detector is disposed in a space on the side of imaging lenses 26 and 28. A mirror 12 is positioned to deflect the light beam passing through lenses 26 and 28 such that it reaches the start of scan detector just before the beam begins to scan along drum 30. The Ori patent states that such positioning of the detector allows the signal to be detected correctly even when there is dirt on a light receiving surface of the apparatus. In the Ori patent, the same light source used for transmitting data is detected by the start of scan detector. A similar system is described in U.S. patent 4,084,197 to Starkweather, the disclosure of which is incorporated herein by reference.

U.S. patent publication 2002/0063908 to Ito et al., the disclosure of which is incorporated herein by reference, describes a scanner in which the start of scan detector is disposed along a light beam path passing through only the first imaging lens 26. Accordingly, imaging lens 28 can be made smaller and hence cheaper.

U.S. patent 3,922,485 to Starkweather, the disclosure of which is incorporated herein by reference, describes a scanner in which separate beams are used for start of scan detection and for data delivery. A laser beam is split upon entering a modulator, which modulates a signal on the beam, and a portion of the beam not passed through the modulator, for start of scan detection, is directed separately toward the polygon mirror. The start of scan detector is positioned on an opposite side of the polygon mirror from that of the laser source.

### SUMMARY OF THE INVENTION

An aspect of some embodiments of the invention relates to having the path of the light beam directed to the start of scan detector include impingement on a scanning reflector of a scanning system at least twice. Having the light path of the start of scan beam pass over the reflector a plurality of times increases the accuracy of the start of scan detection, as the velocity at which the laser beam passes over the detector is determined by the rate of angular motion of the reflector, multiplied by the number of times the beam impinges on the reflector.

In an embodiment of the invention, the reflector is a rotating polygon reflector, such as a polygon mirror. Alternatively, it is an oscillating mirror or other reflector.

Optionally, a mirror or other reflector is positioned on an opposite side of the scanning reflector from the laser source, reflecting the light back onto the scanning reflector and therefrom toward a start-of-scan detector. In some embodiments of the invention, the start-of-scan detector is located adjacent the laser source.

In some embodiments of the invention, a same laser source is used for a data beam of the scanner and a start of scan beam directed to the start-of-scan detector, thus reducing the number of laser sources required. Optionally, the start of scan beam is separated from the data beam after the first impingement on the scanning reflector. Alternatively, the start of scan beam is separated from the data beam before a modulator of the data beam. In other embodiments of the invention, separate laser sources are used to generate the start of scan beam and the data beam, allowing more freedom in the layout of the separate beams.

An aspect of some embodiments of the invention relates to positioning the start of scan detector adjacent the laser source. One or more mirrors or other reflectors, dedicated to the start of scan detection task, are optionally used to direct the laser beam back to the detector.

In some embodiments of the invention, the detector is included in a single housing with the laser source. Optionally, the beams leaving the laser source and entering the detector are substantially parallel, with a small difference of up to about 5°.

An aspect of some embodiments of the invention relates to a start of scan detector having an optical path that is half as long (starting from the scanning reflector) as conventional start of scan systems with comparable resolution. There is thus provided, in accordance with an embodiment of the invention, a method of determining a start of scan time in a laser scanning system utilizing a scanning reflector, comprising:
directing a laser beam toward the scanning reflector so as to be reflected by the scanning reflector;
returning the laser beam reflected from the scanning reflector toward the scanning reflector for at least one additional reflection from the scanning reflector;
detecting the laser beam reflected at least twice from the scanning reflector; and
controlling the start of scan of the scanning system, responsive to the detection of the laser beam.

Optionally, transmitting the laser beam toward the scanning reflector comprises transmitting a beam separate from a beam used for conveying data in the scanning system.

Optionally, detecting the laser beam comprises detecting by a detector adjacent a source of the laser beam.

Optionally, detecting the laser beam comprises detecting by a detector included in a single housing with a source of the laser beam, which housing does not encompass the scanning reflector.

Optionally, the separate beams are generated by a single source and are split on their way to the scanning reflector.

Optionally, transmitting the laser beam toward the scanning reflector comprises transmitting a same beam as used for conveying data in the scanning system.

Optionally, the scanning reflector comprises an oscillating reflector. Alternatively, the scanning reflector comprises a rotating polygon reflector.

There is further provided, in accordance with an embodiment of the invention, a laser scanning system, comprising:
a laser beam source modulated by data;
a scanning reflector;
at least one reflector positioned to receive light from the source that has been reflected from the scanning reflector back toward the scanning reflector;
a detector adapted to detect light reflected at least twice from the scanning reflector; and
a controller adapted to control the timing of the data, responsive to the detection of light by the detector.

Optionally, the at least one reflector comprises a plurality of reflectors, positioned such that the beam is reflected from the reflector more than twice before being detected.

Optionally, the scanning reflector comprises a rotating polygon reflector. Alternatively, the scanning reflector comprises an oscillating reflector.

In an embodiment of the invention, the laser beam source and the detector are included together in a single housing not encompassing the scanning reflector.

There is further provided, in accordance with an embodiment of the invention, a laser scanning system, comprising:
a laser beam source;
a scanning reflector;
a detector adapted to detect light reflected from the scanning reflector;
a mounting element having the laser beam source and the detector but not the scanning reflector mounted therein or thereon; and
a controller adapted to control the timing of the scanning system, responsive to the detection of light by the detector.

Optionally, the scanning reflector comprises a rotating polygon reflector. Alternatively, the scanning reflector comprises an oscillating reflector.

Optionally, the system includes an additional reflector adapted to reflect light from the source, which was reflected from the scanning reflector, back onto the scanning reflector.

### BRIEF DESCRIPTION OF FIGURES

Particular non-limiting embodiments of the invention will be described with reference to the following description of embodiments in conjunction with the figures. Identical structures, elements or parts which appear in more than one figure are preferably labeled with a same or similar number in all the figures in which they appear, in which:
Fig. 1 is a schematic illustration of optics of a scanner known in the art;
Fig. 2 is a schematic illustration of optics of a scanner, in accordance with an exemplary embodiment of the invention;
Fig. 3 is a schematic illustration of optics of a laser scanner, in accordance with an exemplary embodiment of the invention; and
Fig. 4 is a schematic illustration of optics of a laser scanner, in accordance with an exemplary embodiment of the invention.

### DETAILED DESCRIPTION OF EMBODIMENTS

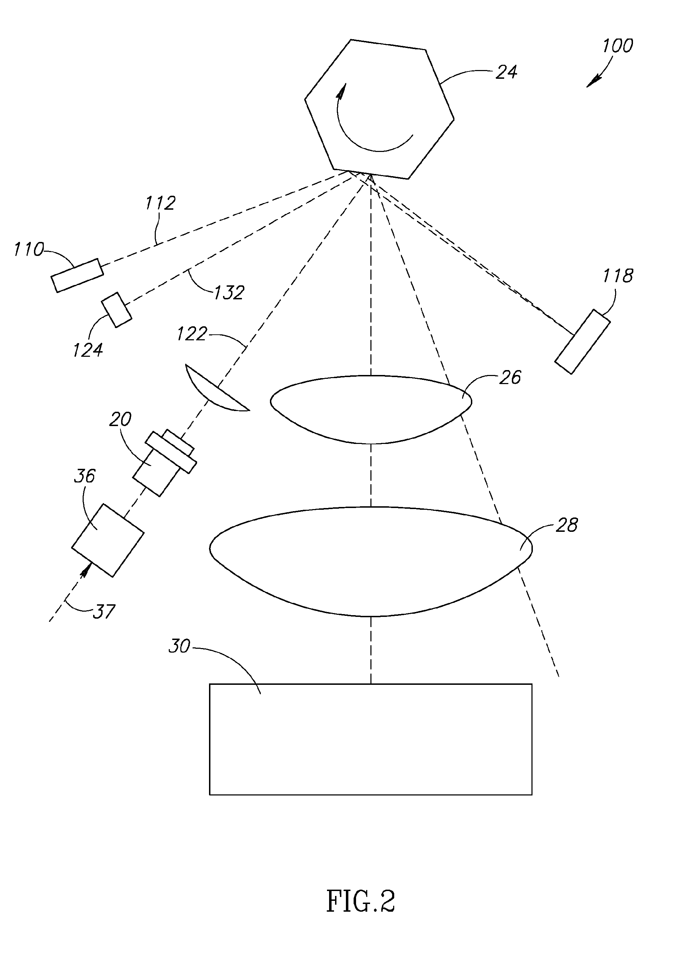

Fig. 2 is a schematic illustration of optics 100 of a laser scanning system, in accordance with an exemplary embodiment of the invention. The scanning system comprises a data laser source 20 for providing a modulated data beam 122, which is reflected by rotating polygon mirror 24, through f-θ lenses 26 and 28, toward drum 30. A start of scan laser source 110, separate from laser source 20, transmits a start of scan laser beam 112 toward polygon mirror 24 at a different angle from laser 122. Start of scan beam 112 is deflected by polygon mirror 24 in a direction depending on the angular orientation of the polygon mirror. A reflector, such as a mirror 118, is positioned near polygon mirror 24, at a location chosen such that when polygon mirror 24 is at an angular position corresponding to the beginning (or just before the beginning) of a scan line along drum 30, start of scan beam 112 is reflected back onto polygon mirror 24 and therefrom toward a start of scan detector 124. It is noted that since start of scan beam 112 moves as polygon mirror 24 rotates, beam 112 is detected by detector 124 only momentarily.

Start of scan detector 124 thus produces a narrow detection pulse whose width depends on the sizes of the beam and the detector, as well as the movement speed of the beam 112. The detection of start-of-scan beam 112 by detector 124 is optionally used to time the modulation of data onto data beam 122, as is known in the art. The optical path of start-of-scan beam 112 may optionally include elements in addition to those shown, such as collimating lenses and/or a slit, as is known in the art.

Reflecting start-of-scan beam 112 twice from polygon mirror 24, doubles the speed at which the reflected start-of-scan beam passes over detector 124, as compared to the geometry of Fig. 1, and therefore increases the detection resolution. The increase in resolution due to the double reflection off polygon mirror 24 may be used to allow positioning of detector 124 on an optical path closer to polygon mirror 24, than is generally used in the art.

The angle of start of scan beam 112 relative to data beam 122 is optionally chosen such that, regardless of the angular position of polygon mirror 24, start of scan beam 112 does not reach drum 30 and/or interfere with the operation of the scanning. In some embodiments of the invention, beam 112 is continuously transmitted. Alternatively, start-of-scan beam 112 is generated only around the time at which the start-of-scan detection is expected. This option relaxes constraints used to prevent interference between the data beam and the start-of-scan beam 112.

Optionally, mirror 118 comprises a flat mirror. Alternatively, mirror 118 comprises a focusing concave mirror which helps focusing start-of-scan beam 112 on detector 124. Alternatively to mirror 118, other reflectors may be used, such as a reflecting prism.

Placement of the reflecting surfaces, in this and other embodiments of the invention, close to the surface of the polygon is useful in that there is increased overlap between reflected beams. It should be understood that in order to provide for a sharply focused beam at the detector (and thus to improve resolution), the beams as reflected by the polygon should be relatively large. Thus, providing the possibility of substantial overlap allows for larger beams being reflected from the polygon.

Mirror 118 is optionally orientated such that when polygon mirror 24 is at the start-of-scan angle, start-of-scan beam 112 hits mirror 118 at an angle slightly off being perpendicular to mirror 118. Thus, start-of-scan beam 112 is reflected back, as a reflected beam 132, to a location very close to start-of-scan source 110, where detector 124 is positioned. Positioning detector 124 close to source 110 makes the scanning system more compact. In some embodiments of the invention, source 110 and detector 124 are included in a single housing and/or are provided as a combined unit, to allow easier service, alignment and/or replacement and to reduce sensitivity to vibrations.

Alternatively, mirror 118 is perpendicular to the start of scan beam 112 at the start of scan angle of polygon mirror 24, such that the reflected beam 132 coincides with the transmitted start of scan beam 112. Optionally, a beam splitter (not shown) separates the reflected beam 132 from the transmitted beam 112 and provides the reflected beam to detector 124. The separation may be performed using any method known in the art, including using a polarizing beam-splitter and a quarter wave plate located between the polygon mirror and mirror 118.

Further alternatively, mirror 118 may be oriented with substantially any other angle relative to polygon mirror 24, and detector 124 is located accordingly. In an exemplary embodiment of the invention, detector 124 is located adjacent data laser source 20. Alternatively, detector 124 is located at any other convenient location.

Alternatively to including a separate laser source for the start-of-scan beam 112, the light generated by data source 20 is split in order to form start-of-scan beam 112. Suitable optics optionally lead the split beam toward polygon mirror 24 at a desired angle.

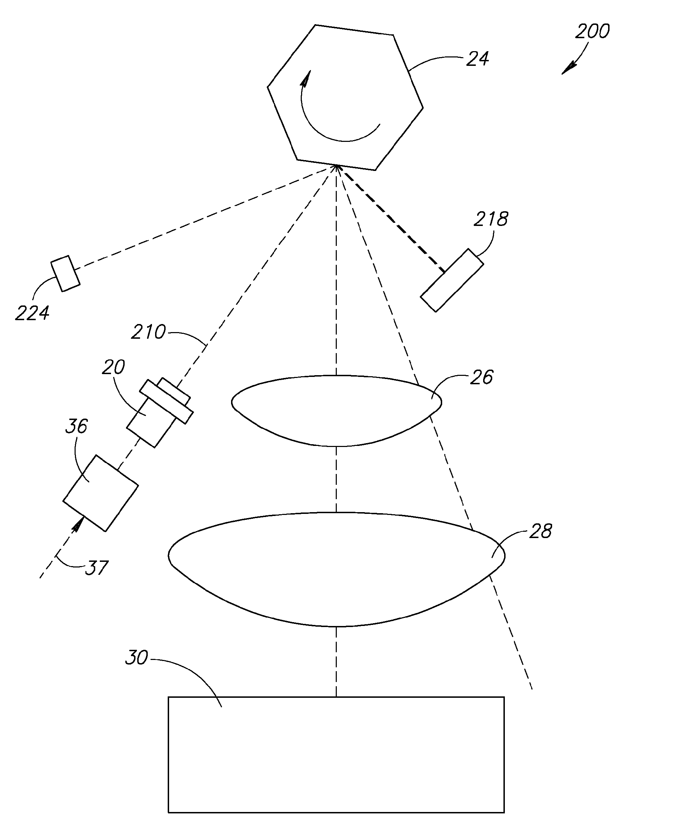

Fig. 3 is a schematic illustration of optics 200 of a laser scanner, in accordance with another exemplary embodiment of the invention. Optics 200 are similar to optics 100 of Fig. 2, but instead of using a separate beam for start of scan detection, the same beam 210 is used both for data and start of scan detection. A mirror 218 is located at a position allowing reflection of the light beam received from polygon 24, at least when polygon mirror 24 is at a start of scan orientation. The beam returned by mirror 218 is bounced back onto polygon mirror 24 and therefrom toward a start-of-scan detector 224.

Mirror 218 is optionally very small, such that it does not block beam 210 when it begins to transfer data to drum 30. Alternatively, the time between the start of scan detection and the actual beginning of the scan is made sufficiently long, so that mirror 218 is not in the line of sight of the beam when the data scanning needs to begin. Further alternatively or additionally, mirror 218 is positioned such that at the start of scan orientation, the beam is reflected by an extreme portion of mirror 218, the remaining part of the mirror being out of the line of sight of drum 30.

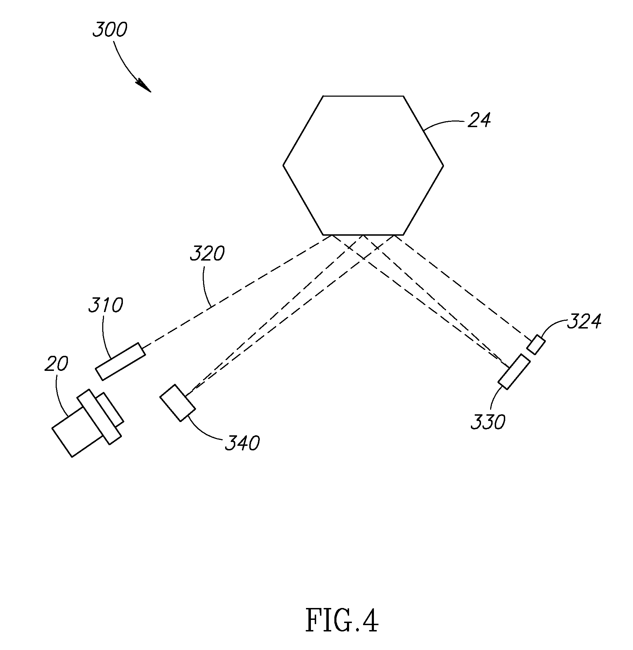

Fig. 4 is a schematic illustration of optics 300 of a laser scanning system, in accordance with an exemplary embodiment of the invention. In optics 300 of Fig. 4, the start of scan beam is bounced off polygon mirror 24 three times, thus increasing the speed at which the beam passes over a start-of-scan detector 324. A start-of-scan source 310 directs a start-of-scan beam 320 toward polygon mirror 24. The beam 320 is reflected therefrom toward a first mirror 330 from which the beam is reflected back onto polygon mirror 24. The beam is then reflected toward a second mirror 340, which reflects the beam back onto polygon mirror 24 and therefrom to detector 324.

In Fig. 4, source 310 and detector 324 are separated by a wide angle of between about 130°-150°, with mirrors 330 and 340 located between the source and the detector. It is noted, however, that other arrangements may be used with greater or smaller angles between source 310 and detector 324. Additionally, one or more of mirrors 330 and 340 may be located outside the angle between source 310 and detector 324.

It will be appreciated by those skilled in the art that similar optic paths may be devised in which the start of scan beam is bounced on polygon mirror 24 substantially any number of times. The number of times the start of scan beam is bounced in a specific laser scanner is optionally chosen as a compromise between the cost of the additional mirrors required and the synchronization required and/or the desired compactness of the scanning system.

The principles and embodiments of the present invention may be used in substantially any laser scanning system, including laser printers and copiers.

It will be appreciated that the above described methods and apparatus may be varied in many ways, including changing the exact implementation used for the apparatus. For example, rather than using a rotating polygon mirror, other scanning reflectors may be used, such as an oscillating (galvo) mirror. It should also be appreciated that the above described methods and apparatus are to be interpreted as including apparatus for carrying out the methods and methods of using the apparatus.

The detailed description describes, as the best mode for carrying out the invention, a system in which a polygon mirror is used to reflect the beam. Other scanning reflectors can be used. In addition, other reflectors are used in the invention and are indicated as being mirrors. However, other, non-mirror reflectors or light deflectors can be used. As used herein, the term mirror includes other reflectors such as reflective and refractive prisms.

The present invention has been described using non-limiting detailed descriptions of embodiments thereof that are provided by way of example and are not intended to limit the scope of the invention. For example, instead of one or more mirrors other optical elements may be used, such as optical fibers. It should be understood that features and/or steps described with respect to one embodiment may be used with other embodiments and that not all embodiments of the invention have all of the features and/or steps shown in a particular figure or described with respect to one of the embodiments. Variations of embodiments described will occur to persons of the art.

It is noted that some of the above described embodiments may describe the best mode contemplated by the inventors and therefore may include structure, acts or details of structures and acts that may not be essential to the invention and which are described as examples. Structure and acts described herein are replaceable by equivalents which perform the same function, even if the structure or acts are different, as known in the art. Therefore, the scope of the invention is limited only by the elements and limitations as used in the claims. When used in the following claims, the terms "comprise", "include", "have" and their conjugates mean "including but not limited to".

## Claims

1. A method of determining a start of scan time in a laser scanning system utilizing a scanning reflector, comprising:
directing a laser beam toward the scanning reflector so as to be reflected by the scanning reflector;
returning the laser beam reflected from the scanning reflector toward the scanning reflector for at least one additional reflection from the scanning reflector;
detecting the laser beam reflected at least twice from the scanning reflector; and
controlling the start of scan of the scanning system, responsive to the detection of the laser beam.

2. A method according to claim 1, wherein transmitting the laser beam toward the scanning reflector comprises transmitting a beam separate from a beam used for conveying data in the scanning system.

3. A method according to claim 1, wherein detecting the laser beam comprises detecting by a detector adjacent a source of the laser beam.

4. A method according to claim 2, wherein detecting the laser beam comprises detecting by a detector adjacent a source of the laser beam.

5. A method according to claim 1, wherein detecting the laser beam comprises detecting by a detector included in a single housing with a source of the laser beam, which housing does not encompass the scanning reflector.

6. A method according to claim 2, wherein the separate beams are generated by a single source and are split on their way to the scanning reflector.

7. A method according to claim 1, wherein transmitting the laser beam toward the scanning reflector comprises transmitting a same beam as used for conveying data in the scanning system.

8. A method according to claim 1, wherein the scanning reflector comprises an oscillating reflector.

9. A method according to claim 1, wherein the scanning reflector comprises a rotating polygon reflector.

10. A method according to claim 5, wherein the scanning reflector comprises a rotating polygon reflector.

11. A laser scanning system, comprising:
a laser beam source modulated by data;
a scanning reflector;
at least one reflector positioned to receive light from the source that has been reflected from the scanning reflector back toward the scanning reflector;
a detector adapted to detect light reflected at least twice from the scanning reflector; and
a controller adapted to control the timing of the data, responsive to the detection of light by the detector.

12. A laser scanning system according to claim 11, wherein the at least one reflector comprises a plurality of reflectors, positioned such that the beam is reflected from the reflector more than twice before being detected.

13. A laser scanning system according to claim 11, wherein the scanning reflector comprises a rotating polygon reflector.

14. A laser scanning system according to claim 12, wherein the scanning reflector comprises a rotating polygon reflector.

15. A laser scanning system according to claim 11, wherein the scanning reflector comprises an oscillating reflector.

16. A laser scanning system according to claim 12, wherein the scanning reflector comprises an oscillating reflector.

17. A laser scanning system according to claim 11, wherein the laser beam source and the detector are included together in a single housing not encompassing the scanning reflector.

18. A laser scanning system, comprising:
a laser beam source;
a scanning reflector;
a detector adapted to detect light reflected from the scanning reflector;
a mounting element having the laser beam source and the detector but not the scanning reflector mounted therein or thereon; and
a controller adapted to control the timing of the scanning system, responsive to the detection of light by the detector.

19. A laser scanning system according to claim 18, wherein the scanning reflector comprises an oscillating reflector.

20. A laser scanning system according to claim 18, wherein the scanning reflector comprises a rotating polygon reflector.

21. A laser scanning system according to claim 18, comprising an additional reflector adapted to reflect light from the source, which was reflected from the scanning reflector, back onto the scanning reflector.
